# EUROPÄISCHE PATENTSCHRIFT

(11) **EP 3 921 137 B1**
(45) Veröffentlichungstag und Bekanntmachung des Hinweises auf die Patenterteilung: **31.05.2023**
(21) Anmeldenummer: 20705911.4
(22) Anmeldetag: 13.02.2020
(51) Int. Cl.: B29C 48/90, B29C 48/09, B33Y 10/00, B22F 3/105, B33Y 30/00, B33Y 50/00, B33Y 80/00

(54) **LAMELLENBLOCK MIT VERSETZTEN LAMELLEN**
LAMELLA BLOCK WITH OFFSET LAMELLAE
BLOC DE LAMELLES COMPORTANT DES LAMELLES DÉCALÉES

(30) Priorität: 21.03.2019 DE 102019002011
(43) Veröffentlichungstag der Anmeldung: 15.12.2021
(73) Patentinhaber: KraussMaffei Extrusion GmbH, 30880 Laatzen (DE)
(72) Erfinder: ESSWEIN, Michael, 85777 Fahrenzhausen (DE)
(74) Vertreter: Wilhelm, Ludwig
(86) Internationale Anmeldenummer: PCT/EP2020/053699
(87) Internationale Veröffentlichungsnummer: WO 2020/187497

(56) Entgegenhaltungen:
- DE-A1-102009 016 100
- DE-B3- 10 315 125
- DE-B3-102005 002 820
- US-A1- 2003 211 657

## Beschreibung

Die Erfindung betrifft einen Lamellenblock für eine Kalibriereinrichtung zur Kalibrierung eines extrudierten Profils. Die Erfindung betrifft ferner ein Verfahren zur Herstellung eines derartigen Lamellenblocks, ein System zur additiven Fertigung eines derartigen Lamellenblocks und ein entsprechendes Computerprogramm und Datensatz.

Kalibriereinrichtungen werden zur Kalibrierung von extrudierten Endlosprofilen, wie beispielsweise Rohrprofilen, eingesetzt. Bei der Herstellung derartiger Profile wird zunächst in einem Extruder eine zur Herstellung des Profils gewünschte Kunststoffschmelze erzeugt. Die erzeugte Kunststoffschmelze wird dann durch eine Austrittsdüse des Extruders gepresst, welche die Form des Profils vorgibt. Das aus der Austrittsdüse des Extruders austretende Profil durchläuft anschließend eine Kalibriereinrichtung, welche das noch erhitzte Profil dimensionsgenau nachformt.

Eine derartige Kalibriereinrichtung zur Dimensionierung extrudierter Profile ist aus der DE 198 43 340 C2 bekannt. Dort wird eine variabel einstellbare Kalibriereinrichtung gelehrt, die zur Kalibrierung von extrudierten Kunststoffrohren mit unterschiedlichem Rohrdurchmesser ausgebildet ist. Die Kalibriereinrichtung umfasst ein Gehäuse und eine Vielzahl von im Gehäuse kreisförmig angeordneten Lamellenblöcken, die zusammen einen Kalibrierkorb mit kreisförmiger Kalibrieröffnung bilden, durch welche die zu kalibrierenden Rohre geführt werden (vgl. insbesondere die Figuren 1 und 2 der DE 198 43 340 C2). Ferner ist jeder Lamellenblock mit einer Betätigungsvorrichtung gekoppelt, die zur individuellen radialen Verschiebung des jeweiligen Lamellenblocks vorgesehen ist. Auf diese Weise kann der Wirkquerschnitt der durch die Vielzahl der Lamellenblöcke gebildeten kreisförmigen Kalibrieröffnung je nach Bedarf entsprechend eingestellt werden.

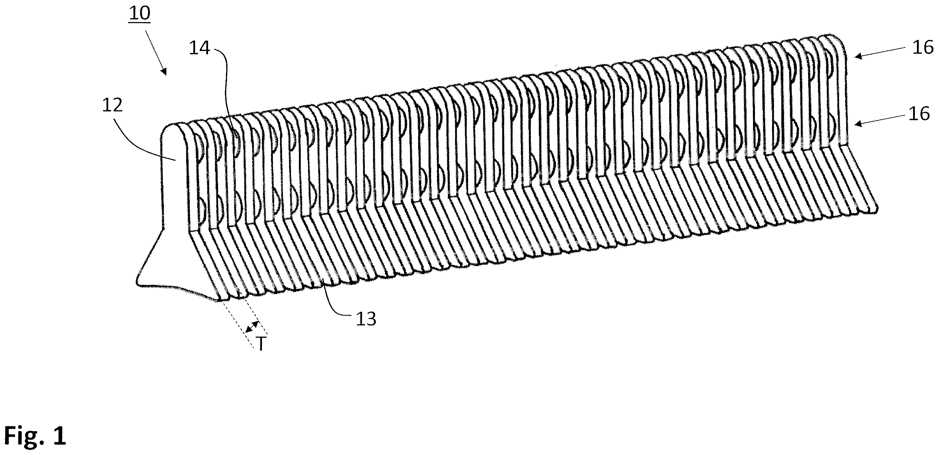

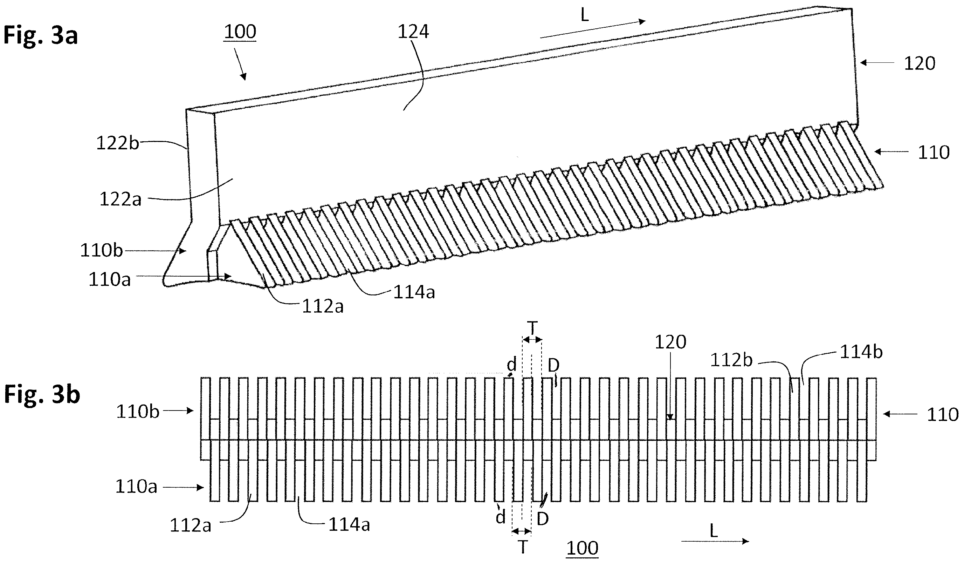

Die in der DE 198 43 340 C2 beschriebenen Lamellenblöcke bestehen jeweils aus einer Vielzahl von Lamellen, die auf zwei voneinander beabstandet angeordneten Trägerstangen aufgefädelt sind. Zur Einhaltung eines gewünschten Abstands zwischen benachbarten Lamellen kommen Abstandshülsen zum Einsatz (vgl. auch Figur 3 der DE 198 43 340 C2). Ein Beispiel eines gefädelten Lamellenblocks ist ferner in der Figur 1 gezeigt. Der in Figur 1 dargestellte Lamellenblock 10 umfasst eine Vielzahl von Lamellen 12 und Abstandshülsen 14, die abwechselnd entlang zweier Trägerstangen 16 aufgefädelt sind. Die Abstandshülsen 14 legen die Abstände (Nuten 13) zwischen benachbarten Lamellen 12 fest. Derartige gefädelte Lamellenblöcke sind aufwendig in der Fertigung und damit kostenintensiv.

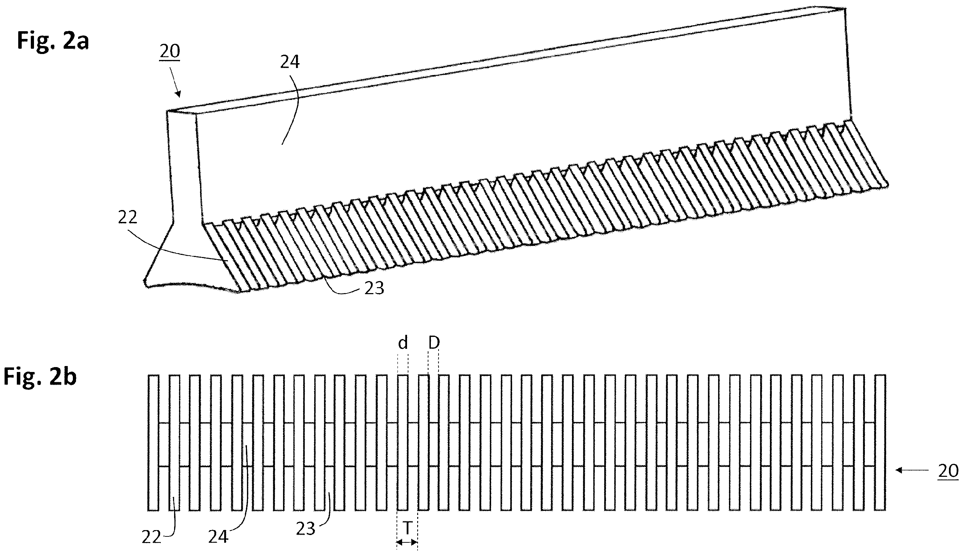

Abweichend von den oben beschriebenen gefädelten Lamellenblöcken sind ferner Lamellenblöcke mit geschlossenen Trägerstrukturen (bzw. Rückenstrukturen) bekannt. Die Figuren 2a und 2b zeigen ein Beispiel eines derartigen Lamellenblocks 20, wobei Figur 2a eine 3D-Ansicht des Lamellenblocks 20 und Figur 2b eine Ansicht auf die dem zu kalibrierenden Profi zugewandten Innenseite des Lamellenblocks 20 zeigt. Der Lamellenblock 20 umfasst eine Vielzahl von Lamellen 22, die von einer blockförmig ausgebildeten Rückenstruktur 24 getragen werden (vgl. 3D-Ansicht in Figur 2a). Die blockförmige Rückenstruktur 24 ist hierbei in der Form eines massiven Körpers (z.B. stabförmiger Körper) realisiert. Weitere Beispiele von Lamellenblöcken mit geschlossener Rückenstruktur sind aus der WO 2004/103684 A1 bekannt. Derartige Lamellenblöcke können einstückig ausgebildet sein. Sie können durch geeignete Bearbeitungsverfahren (wie beispielsweise Fräsen, Zuschneiden) aus einem Materialblock kostengünstig hergestellt werden. Denkbar ist aber auch der Einsatz eines Gussverfahrens, um den Lamellenblock 20 herzustellen.

Den in den Figuren 1, 2a und 2b dargestellten Lamellenblöcken 10, 20 ist gemeinsam, dass die Lamellen 12, 22 symmetrisch ausgebildet und bezüglich den Trägerstangen 16 bzw. der Trägerstruktur 24 symmetrisch angeordnet sind. Die Lamellen 12, 22 ragen an gegenüberliegenden lateralen Seiten des Lamellenblocks 10, 20 gleich weit hervor und weisen in Längsrichtung dieselbe Teilung *T* auf. Mit Teilung *T* ist hierbei die kleinste Länge innerhalb der Lamellenstruktur gemeint, nach der sich die Anordnung der Lamellen 12, 22 wiederholt. Die Teilung *T* hängt von der Breite d der Lamellen 12, 22 und der Breite D der Nuten 13, 23 innerhalb der Lamellenstruktur ab und entspricht der Summe der Breiten einer Lamelle 12, 22 und ihrer angrenzenden Nut 13, 23 (also *T* = *d* + *D*)*.*

Beim Zusammenbau der oben beschriebenen Lamellenblöcke 10, 20 zu einem Kalibrierkorb mit einstellbarer Kalibrieröffnung müssen benachbart angeordnete Lamellenblöcke 10, 20 zueinander versetzt angeordnet werden. Denn nur so können die Lamellen 12, 22 eines Lamellenblocks 10, 20 in die Nuten 13, 23 des benachbart angeordneten Lamellenblocks 10, 20 eingreifen und je nach Stärke des Eingriffs einen Kalibrierkorb mit variabler Kalibrieröffnung erzeugen, wie in der DE 194 43 340 C2 vorgeschlagen.

Durch die zueinander versetzte Anordnung der Lamellenblöcke 10, 20 sind Anpassungen an der Trägerstruktur der jeweiligen Lamellenblöcke 10, 20 notwendig, um eine Kopplung der Lamellenblöcke 10, 20 mit in der Kalibriereinrichtung vorinstallierten Betätigungsvorrichtungen zu ermöglichen. Die Betätigungsvorrichtungen sind zur individuellen Verschiebung der Lamellenblöcke 10, 20 senkrecht zur Vorschubrichtung des zu kalibrierenden Profils vorgesehen. Diese Anpassungen betreffen insbesondere die Anordnung von Kopplungselementen, wie beispielsweise Aufnahmebohrungen im Lamellenträger (in den Figuren 2a und 2b nicht dargestellt), die dazu vorgesehen sind, eine stabile mechanische Kopplung zwischen den Betätigungsvorrichtungen und den jeweiligen Lamellenblöcken 10, 20 zu realisieren. Somit braucht es zumindest zwei Sätze von Lamellenblöcken 10, 20, die zumindest in der Trägerstruktur bzw. in der Ausbildung der Kopplungselemente in der Trägerstruktur verschieden voneinander ausgebildet sind, und zwar derart, dass über die Trägerstruktur bzw. ihre Kopplungselemente der beim Zusammenbau zu einem Kalibrierkorb auftretende Versatz in Längsrichtung der Lamellenblöcke kompensiert wird.

Der beim Zusammenbau zu einem Kalibrierkorb auftretende Versatz zwischen benachbarten Lamellenblöcken kann alternativ auch dadurch kompensiert bzw. eliminiert werden, dass zwei verschiedene Sätze von Lamellenblöcken bereitgestellt werden, die zwar dieselbe Trägerstruktur aufweisen, sich jedoch in der Lamellenstruktur voneinander unterscheiden. Konkret wird ein Satz von ersten Lamellenblöcken bereitgestellt, die bezüglich ihrer jeweiligen Trägerstruktur eine versetzt angeordnete Lamellenstruktur aufweisen. Ferner wird ein Satz von zweiten Lamellenblöcken bereitgestellt, deren Lamellenstruktur keinen Versatz bezüglich ihrer jeweiligen Trägerstruktur aufweisen. Der beim Zusammenbau zu einem Kalibrierkorb auftretende Versatz in Längsrichtung der Lamellenblöcke wird somit über die versetzte Anordnung der Lamellenstrukturen an der Trägerstruktur kompensiert. Auch in dieser Variante sind zwei unterschiedliche Sätze von Lamellenblöcken notwendig, um den beim Zusammenbau der Lamellenblöcke auftretenden Versatz zu kompensieren. Die Bereitstellung von zwei unterschiedlichen Lamellenblocksätzen zur Erzeugung eines Lamellenkorbs ist jedoch aufwendig. Ferner muss bei der Montage der Lamellenblöcke darauf geachtet werden, dass die aufeinander abgestimmten Lamellenblöcke alternierend in der Kalibriereinrichtung eingebaut werden, was die Montage zusätzlich erschwert.

DE 10 2009 016 100 A1 betrifft eine Kalibriervorrichtung für eine Anlage zur Extrusion von Kunststoffrohren umfassend Kalibrierwerkzeuge, die bei der Kalibrierung an der Außenwandung des Rohres anliegen, wobei eine Mehrzahl von segmentförmigen Kalibrierwerkzeugen über den Umfang des zu kalibrierenden Rohres verteilt jeweils mit Abstand ihrer Mittelpunkte zueinander angeordnet sind und jeweils eine ringförmige Anordnung bilden und wobei in Produktionsrichtung des Rohres gesehen eine Mehrzahl solcher ringförmiger Anordnungen vorgesehen sind, wobei die einzelnen Werkzeuge zweier in Längsrichtung aufeinanderfolgender ringförmiger Anordnungen jeweils in Umfangsrichtung zueinander versetzt stehen und die segmentförmigen Werkzeuge des in Längsrichtung unmittelbar folgenden Rings jeweils in die Lücke zwischen den Werkzeugen eines Rings und des übernächsten Rings eingreifen, so dass sich eine verzahnte Anordnung ergibt. Erfindungsgemäß ist vorgesehen, dass die einzelnen segmentförmigen sich in Umfangsrichtung erstreckenden Kalibrierwerkzeuge als Hohlkörper ausgebildet sind und im Bereich ihrer am Rohrumfang anliegenden Gleitflächen Schlitze aufweisen, welche mit einem Hohlraum in dem Hohlkörper in Verbindung stehen. Dadurch kann man Wasser oder Unterdruck über die Schlitze auf die Rohroberfläche geben.

DE 10 2005 002 820 B3 betrifft eine stufenlos einstellbare Kalibrierhülse für extrudierte Kunststoffrohre mit einem Einlaufkopf und zwei Bänderlagen, die sich nach Art eines Scherengitters kreuzen und an den Kreuzungspunkten gelenkig miteinander verbunden sind. Dabei sind der Einlaufkopf und die Bänderlagen auf den Rohrdurchmesser einstellbar und der Einlaufkopf weist in einer Radialebene angeordnete, auf den Umfang des zu kalibrierenden Kunststoffrohres verteilte, radial verstellbare und sich überlappende Segmente auf, die in ihren Überlappungsbereichen Schlitze aufweisen und verzahnend ineinandergreifen. Die Stirnseiten der Segmente sind zur Anlage an das zu kalibrierende Kunststoffrohr ausgebildet und die Bänderlagen sind bündig mit den Stirnseiten gelenkig an den Segmenten befestigt. Mit einer derartigen Kalibrierhülse soll eine effektive Abdichtung des Vakuumtanks gegenüber der Umgebung erreicht sowie Stauchungen des einlaufenden, extrudierten Kunststoffrohres vermieden werden.

US 2003 / 211 657 A1 beschreibt einen stereolithographisch gefertigten Kühlkörper. Der Kühlkörper weist ein Wärmeübertragungselement auf, das so konfiguriert ist, dass es in der Nähe einer Halbleitervorrichtung angeordnet ist, um während seiner Verwendung Wärme von der Halbleitervorrichtung zu absorbieren. Der Kühlkörper hat auch ein Wärmeableitungselement, das konfiguriert ist, um Wärme abzugeben, wenn Luft an einer Oberfläche davon vorbeiströmt. Wenn stereolithographische Verfahren verwendet werden, um das Wärmeableitungselement des Kühlkörpers herzustellen, kann das Wärmeableitungselement nichtlineare oder gewundene Durchgänge aufweisen, durch die Luft strömen kann. Da mindestens ein Teil des Kühlkörpers stereolithographisch hergestellt ist, kann dieser Teil eine Reihe übereinanderliegender, zusammenhängender, aneinander haftender Schichten aus wärmeleitendem Material aufweisen. Die Schichten können durch konsolidierte ausgewählte Bereiche einer Schicht aus nicht konsolidiertem teilchenförmigem oder pulverförmigem Material oder durch Definieren einer Objektschicht aus einer Materialschicht hergestellt werden. Das stereolithographische Verfahren kann die Verwendung eines Bildverarbeitungssystems umfassen, das mindestens eine Kamera umfasst, die betriebsbereit mit einem Computer verbunden ist, der eine stereolithographische Materialanwendung steuert, so dass das System die Position und Ausrichtung einer Halbleitervorrichtung oder eines anderen Substrats erkennen kann, auf dem sich der Kühlkörper befindet hergestellt werden.

DE 103 15 125 B3 betrifft eine Kalibriereinrichtung zur Kalibrierung von extrudierten Endlosprofilen, insbesondere Rohren, umfassend eine Vielzahl von aus einzelnen Segmenten bestehenden hintereinander angeordneten Segmentkränzen, deren Innenoberfläche gemeinsam eine Kalibrieröffnung bilden, wobei in Axialrichtung hintereinander liegende Segmente zu einem Segmentblock zusammengefasst sind, die einzelnen Segmente eines jedes Segmentblockes auf einer Trägerstruktur angeordnet sind, die Segmentblöcke im Wesentlichen kreisförmig derart in einem Gehäuse aufgenommen sind, dass sich axial benachbarte Segmente in jeder Stellung in Umfangsrichtung teilweise überlappen, und jede Trägerstruktur mit zumindest einer Halterungs- und Betätigungsvorrichtung verbunden ist, mit der die einzelnen einer jeweiligen Trägerstruktur (zugeordneten Segmentblöcke (16) in dem Gehäuse gehalten sind und eine Verstellung jedes einzelnen Segmentblockes (16) in Radialrichtung vornehmbar ist. Zum leichteren Einbau und zur leichteren Montage wird dabei vorgeschlagen, dass jede Halterungs- und Betätigungsvorrichtung zweigeteilt aufgebaut ist, wobei ein erster Teil mit der Trägerstruktur verbunden ist, ein zweiter Teil in dem Gehäuse aufgenommen ist und beide Teile trennbar miteinander verbunden sind.

Aufgabe der vorliegenden Erfindung ist es, Lamellenblöcke für eine Kalibriereinrichtung bereitzustellen, welche die im Zusammenhang mit dem Stand der Technik aufgezeigten Probleme weiter reduzieren bzw. beseitigen. Insbesondere ist es Aufgabe der vorliegenden Erfindung, Lamellenblöcke bereitzustellen, welche die oben beschriebenen Versatzprobleme beim Zusammenbau der Lamellenblöcke zu einem Kalibrierkorb beseitigt.

Zur Lösung der oben genannten Aufgabe wird gemäß einem ersten Aspekt ein Lamellenblock für eine Kalibriereinrichtung zur Kalibrierung eines extrudierten Profils bereitgestellt. Der Lamellenblock umfasst eine Lamellenstruktur, welche eine Vielzahl von Lamellen aufweist, die durch Nuten voneinander beabstandet und in Längsrichtung des Lamellenblocks angeordnet sind, wobei die Lamellenstruktur zwei Lamellensätze aufweist, wobei die Lamellen des ersten Lamellensatzes bezüglich der Lamellen des zweiten Lamellensatzes in Längsrichtung des Lamellenblocks versetzt angeordnet sind.

Das extrudierte Profil kann ein Kunststoffprofil sein. Das extrudierte Kunststoffprofil kann ein Endlosprofil, wie beispielsweise ein Rohrprofil sein.

Mit Längsrichtung des Lamellenblocks kann jene Richtung gemeint sein, die einer Vorschubrichtung eines zu extrudierenden Profils entspricht.

Die Lamellen des ersten Lamellensatzes können an einer ersten Seite des Lamellenblocks angeordnet sein. Ferner können die Lamellen des zweiten Lamellensatzes an einer der ersten Seite gegenüberliegenden zweiten Seite des Lamellenblocks angeordnet sein. Somit können die Lamellen des ersten Lamellensatzes an einer ersten Seite des Lamellenblocks hervorragen, während die Lamellen des zweiten Lamellensatzes an einer der ersten Seite gegenüberliegenden zweiten Seite des Lamellenblocks hervorragen. Mit erster Seite und zweiter Seite können die in Längsrichtung des Lamellenblocks verlaufenden lateralen Seiten (Flanken) des Lamellenblocks gemeint sein.

Die Lamellen des ersten Satzes und die Lamellen des zweiten Satzes können (im Wesentlichen) identisch ausgebildet sein. Sie können dieselbe Form und/oder Abmessungen aufweisen. Alternativ hierzu können die Lamellen des ersten Satzes und die Lamellen des zweiten Satzes verschieden zueinander ausgebildet sein. Die Lamellen des ersten Satzes können sich in Form und/oder Abmessung von den Lamellen des zweiten Satzes unterscheiden.

Unabhängig von der konkreten Ausgestaltung der Lamellen des ersten Satzes und der Lamellen des zweiten Satzes können die beiden Lamellensätze (in Längsrichtung des Lamellenblocks) eine identische oder eine voneinander unterschiedliche Teilung aufweisen. Mit Teilung ist der Abstand innerhalb eines jeden Lamellensatzes gemeint, nach dem sich die Anordnung der Lamellen wiederholt. Die Teilung eines jeden Lamellensatzes in Längsrichtung des Lamellenblocks (also entlang des Lamellenblocks) hängt von der Breite der Lamellen und der Breite der Nuten ab. Die Teilung (Teilungslänge) der Lamellenstruktur setzt sich aus der Breite einer Lamelle und der Breite ihrer angrenzenden Nut zusammen.

Gemäß einer Variante können die Lamellen des ersten Satzes bezüglich der Lamellen des zweiten Satzes derart versetzt angeordnet sein, dass in Längsrichtung des Lamellenblocks die Lamellen des ersten Lamellensatzes mit den Nuten des zweiten Lamellensatzes zusammenfallen. Genauso können in Längsrichtung das Lamellenblocks die Lamellen des zweiten Lamellensatzes mit den Nuten des ersten Lamellensatzes zusammenfallen. Mit anderen Worten können innerhalb der Lamellenstruktur die Lamellen des ersten Lamellensatzes in Längsrichtung des Lamellenblocks dort angeordnet sein, wo sich die Nuten des zweiten Lamellensatzes befinden und umgekehrt. Eine derartige Lamellenstruktur ist möglich, wenn die beiden Lamellensätze beispielsweise dieselbe Teilung aufweisen.

Der Lamellenblock kann ferner eine Trägerstruktur aufweisen, an dem die Lamellenstruktur angeordnet ist. Die Trägerstruktur kann eine blockförmige Rückenstruktur umfassen, die balkenförmig ausgebildet ist. Die blockförmige Rückenstruktur kann ferner mit Durchbrechungen versehen sein, um das Gewicht des Lamellenblocks zu reduzieren.

Die Trägerstruktur kann mit den Lamellen bzw. der Lamellenstruktur einstückig ausgebildet sein. Zur Erreichung einer einstückigen Ausbildung kann der Lamellenblock mittels 3D-Druck hergestellt werden. Denkbar ist jedoch auch, dass der Lamellenblock beispielsweise durch Fräsen, Bohren und/oder Schneiden aus einem einzigen Werkstück gefertigt wird. Alternativ kann die Lamellenstruktur bzw. die Lamellen sowie die Trägerstruktur jeweils separat gefertigt sein. Die Lamellenstruktur (bzw. die Lamellen) kann (können) dann mit der Trägerstruktur entsprechend verbunden sein.

Die Trägerstruktur und die Lamellen können aus demselben Material oder aus verschiedenen Materialien gefertigt sein. Gemäß einer Variante kann das Material, aus dem die Trägerstruktur und/oder die Lamellen gefertigt sind, aus einem metallischen Werkstoff gefertigt sein. Denkbar ist jedoch auch die Verwendung eines polymeren Werkstoffs (mit Additiven).

Gemäß einem weiteren Aspekt der Erfindung wird eine Kalibriereinrichtung zur Kalibrierung von extrudierten Kunststoffprofilen bereitgestellt, wobei die Kalibriereinrichtung eine Vielzahl der erfindungsgemäßen Lamellenblöcke aufweist, die zur Bildung einer Kalibrieröffnung zueinander angeordnet sind. Die Anordnung der Lamellenblöcke kann dabei derart sein, dass diese eine kreisrunde Kalibrieröffnung bilden.

Die Kalibriereinrichtung kann ferner eine Vielzahl von Betätigungseinrichtungen umfassen, wobei jede Betätigungseinrichtung jeweils mit einem Lamellenblock gekoppelt ist. Durch die Betätigungseinrichtung kann jeder Lamellenblock radial zur Kalibrieröffnung individuell betätigt werden. Dadurch kann der Wirkquerschnitt der Kalibrieröffnung nach Bedarf an den Querschnitt (Durchmesser) des zu kalibrierenden Profils angepasst werden.

Ferner kann die Kalibriereinrichtung ein Gehäuse aufweisen, das zur Aufnahme und Lagerung der Betätigungseinrichtungen und der mit den Betätigungseinrichtungen gekoppelten Lamellenblöcke vorgesehen ist.

Gemäß einem weiteren Aspekt der Erfindung wird ein Verfahren zum Herstellen eines Lamellenblocks wie oben beschrieben bereitgestellt. Das Verfahren zum Herstellen des Lamellenblocks umfasst wenigstens den Schritt des Herstellens des Lamellenblocks mittels 3D-Druck oder mittels additiver Fertigungsverfahren. Die Herstellung des Lamellenblocks mittels 3D-Druckverfahren oder additiver Fertigungsverfahren kann hierbei ein schichtweises Lasersintern/Laserschmelzen von Materialschichten umfassen, wobei die Materialschichten entsprechend der zu erzeugenden Form des Lamellenblocks nacheinander (sequentiell) aufgetragen werden.

Das Verfahren kann ferner den Schritt des Berechnens einer Lamellenblockgeometrie (CAD-Daten) umfassen und, optional, den Schritt des Umwandelns der 3D-Geometriedaten in entsprechende Steuerbefehle für den 3D-Druck oder die additive Fertigung.

Gemäß einem weiteren Aspekt wird ein Verfahren zum Herstellen eines Lamellenblocks bereitgestellt, das die Schritte umfasst: Erstellen eines Datensatzes, welcher den wie oben beschriebenen Lamellenblock abbildet; und Speichern des Datensatzes auf einer Speichervorrichtung oder einem Server. Das Verfahren kann ferner umfassen: Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock fertigt.

Gemäß einem weiteren Aspekt wird ein System zur additiven Fertigung eines Lamellenblocks bereitgestellt, mit einer Datensatzerzeugungsvorrichtung zum Erzeugen eines Datensatzes, welcher den wie oben beschriebenen Lamellenblock abbildet, einer Speichervorrichtung zum Speichern des Datensatzes und einer Verarbeitungsvorrichtung zum Empfangen des Datensatzes und zum derartigen Ansteuern einer Vorrichtung zur additiven Fertigung, dass diese den im Datensatz abgebildeten Lamellenblock fertigt. Die Speichervorrichtung kann ein USB-Stick, eine CD-ROM, eine DVD, eine Speicherkarte oder eine Festplatte sein. Die Verarbeitungsvorrichtung kann ein Computer, ein Server oder ein Prozessor sein.

Gemäß einem weiteren Aspekt wird ein Computerprogramm bzw. Computerprogrammprodukt bereitgestellt, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung den wie oben beschriebenen Lamellenblock fertigt.

Gemäß einem weiteren Aspekt wird ein computerlesbarer Datenträger bereitgestellt, auf dem das vorstehend beschriebene Computerprogramm gespeichert ist. Der computerlesbare Datenträger kann ein USB-Stick, eine CD-ROM, eine DVD, eine Speicherkarte oder eine Festplatte sein.

Weitere Vorteile, Einzelheiten und Aspekte der vorliegenden Erfindung werden anhand der nachfolgenden Zeichnungen diskutiert. Es zeigen:
- Fig. 1: eine 3D-Ansicht eines Lamellenblocks für eine Kalibriereinrichtung gemäß dem Stand der Technik;
- Fign. 2a/2b: Ansichten eines weiteren Lamellenblocks für eine Kalibriereinrichtung gemäß dem Stand der Technik;
- Fig. 3a/3b: Ansichten eines Lamellenblocks gemäß der vorliegenden Erfindung;
- Fig. 4: eine Darstellung einer Anordnung von zwei erfindungsgemäßen Lamellenblöcken;
- Fig. 5: ein Blockdiagramm eines Verfahrens zur Herstellung des in den Figuren 3a und 3b gezeigten Lamellenblocks; und
- Fig. 6: eine Kalibriereinrichtung gemäß der vorliegenden Erfindung.

Die Figuren 1, 2a und 2b wurden bereits im Zusammenhang mit dem Stand der Technik eingangs diskutiert. Es sei auf die dortige Beschreibung verwiesen.

Im Zusammenhang mit den Figuren 3a und 3b wird nun ein erfindungsgemäßer Lamellenblock 100 für eine Kalibriereinrichtung weiter beschrieben. Figur 3a zeigt eine 3D-Ansicht des erfindungsgemäßen Lamellenblocks 100. Figur 3b zeigt eine Ansicht auf eine Innenseite des Lamellenblocks 100. Mit Innenseite wird jene Seite des Lamellenblocks 100 bezeichnet, die einem zu kalibrierenden Profil zugewandt ist.

Der Lamellenblock 100 umfasst eine Lamellenstruktur 110, die eine Vielzahl von Lamellen 112a, 112b und Nuten 114a, 114b umfasst, welche benachbarte Lamellen 112a, 112b voneinander trennen. Mit Nuten 114a, 114b werden die Freiräume (Abstände) zwischen aufeinanderfolgenden Lamellen 112a, 112b bezeichnet. In Figur 3b ist jede einzelne Lamelle 112a, 112b der Lamellenstruktur 110 in Form eines Querbalkens dargestellt. Der Lamellenblock 100 umfasst ferner eine Trägerstruktur 120 zur Aufnahme (Lagerung) der Lamellen 112 (bzw. der Lamellenstruktur 110). Die Trägerstruktur 120 ist mit der Lamellenstruktur 110 einstückig ausgebildet. Alternativ zu der in der Figur 3a gezeigten Ausführung können die Trägerstruktur 120 und die Lamellenstruktur 110 (bzw. die Lamellen 112a, 112b) jeweils als separate Lamellenblockelemente ausgebildet sein. Die Lamellenstruktur 110 bzw. deren Lamellen 112a, 112b werden dann entlang der Trägerstruktur 110 entsprechend angeordnet und montiert.

Die Trägerstruktur 120, entlang der die Lamellen 112a, 112b angeordnet sind, ist in Figur 3a dargestellt und wird im Folgenden weiter beschrieben. Die Trägerstruktur 120 umfasst eine blockförmig ausgebildete Rückenstruktur 124. Die Rückenstruktur 124 ist als länglicher, balkenförmiger Körper ausgebildet. Der balkenförmig ausgebildete Körper weist senkrecht zur Längsrichtung *L* einen rechteckförmigen Querschnitt auf. Ferner kann die Rückenstruktur 124 Kopplungselemente, wie beispielsweise Gewindebohrungen, aufweisen, die zur mechanischen Kopplung des Lamellenblocks 100 mit einer Betätigungseinrichtung vorgesehen sind (in der Figur 3a nicht gezeigt).

Alternativ zu der hier beschriebenen, balkenförmig ausgebildeten Rückenstruktur 124 kann die Trägerstruktur 120 des Lamellenblocks 100 wenigstens eine Trägerstange aufweisen, an der die Lamellen 112 aufgefädelt sind, so wie in Zusammenhang mit dem Lamellenblock in der Figur 1 eingangs beschrieben. Der Abstand (Nuten) zwischen aufeinanderfolgenden Lamellen 112 wird im aufgefädelten Lamellenblock mittels Abstandshülsen geeigneter Länge realisiert.

Im Folgenden wird nun die Lamellenstruktur 110 des Lamellenblocks 100 weiter beschrieben. Die Lamellenstruktur 100 umfasst zwei Lamellensätze 110a, 110b, wobei ein erster Lamellensatz 110a Lamellen 112a und ein zweiter Lamellensatz 110b Lamellen 112b umfasst. Die Lamellen 112a des ersten Lamellensatzes 110a sind bezüglich der Lamellen 112b des zweiten Lamellensatzes 110b in Längsrichtung *L* des Lamellenblocks 100 versetzt angeordnet. Die Lamellen 112a, 112b der beiden Lamellensätze 110a, 110b sind ferner derart ausgebildet und in Längsrichtung *L* des Lamellenblocks 100 angeordnet, dass die Lamellen 112a des ersten Lamellensatzes 110a an einer ersten lateralen Seite 122a des Lamellenblocks 100 hervorstehen, während die Lamellen 112b des zweiten Lamellensatzes 110b an einer zweiten lateralen Seite 122b des Lamellenblocks 100 hervorstehen. Die zweite laterale Seite 122b ist hierbei der ersten lateralen Seite gegenüberliegend angeordnet.

In Zusammenhang mit der Figur 3b wird die Struktur und Anordnung der beiden Lamellen-sätze 110a, 100b weiter beschrieben. Die beiden Lamellensätze 110a, 110b weisen in Längsrichtung *L* des Lamellenblocks 100 jeweils dieselbe Teilung *T* auf. Mit Teilung *T* (bzw. Teilungslänge) ist hierbei der Abstand gemeint, nach dem sich die Anordnung der Lamellen 112a, 112b innerhalb der jeweiligen Lamellensätze 110a, 110b entlang der Lamellenstruktur 110 wiederholt. Die Teilung setzt sich aus der Breite *d* der jeweiligen Lamellen 112a, 112b und der Breite *D* der jeweiligen Nuten 114a, 114b zwischen den Lamellen 112a, 112b zusammen, also *T* = *d+D* (siehe Figur 3b). Wie ferner aus der Figur 3b zu entnehmen ist, weisen die Lamellen 112a des ersten Lamellensatzes 110a und die Lamellen 112b des zweiten Lamellensatzes 110b dieselben Breiten *d* auf. Ebenso entspricht die Breite der Nuten 114a der Breite der Nuten 114b. Der einzige Unterschied zwischen den beiden Lamellensätzen 110a, 110b besteht somit in ihrer Anordnung innerhalb des Lamellenblocks 100.

Wie aus der Figur 3b hervorgeht, ist der erste Lamellensatz 110a bezüglich des zweiten Lamellensatzes 110b entlang des Lamellenblocks 100 versetzt angeordnet. Der erste Lamellensatz 110a ist bezüglich des zweiten Lamellensatzes 110b derart versetzt angeordnet, dass entlang des Lamellenblocks 100 die Lamellen 112b des zweiten Lamellensatzes 110b jeweils mit Nuten 114a des ersten Lamellensatzes 110a zusammenfallen und umgekehrt. Mit anderen Worten sind die Lamellen 112a des ersten Lamellensatzes 110a in Längsrichtung *L* an jenen Positionen angeordnet, an denen die Nuten 114b des zweiten Lamellensatzes 110b vorgesehen sind und umgekehrt. Es entsteht somit eine Lamellenstruktur 110 mit zwei komplementär zueinander angeordneten Lamellensätzen 110a, 110b. Diese zwei komplementär zueinander angeordneten Lamellensätze 110a, 110b können miteinander in Eingriff gebracht werden.

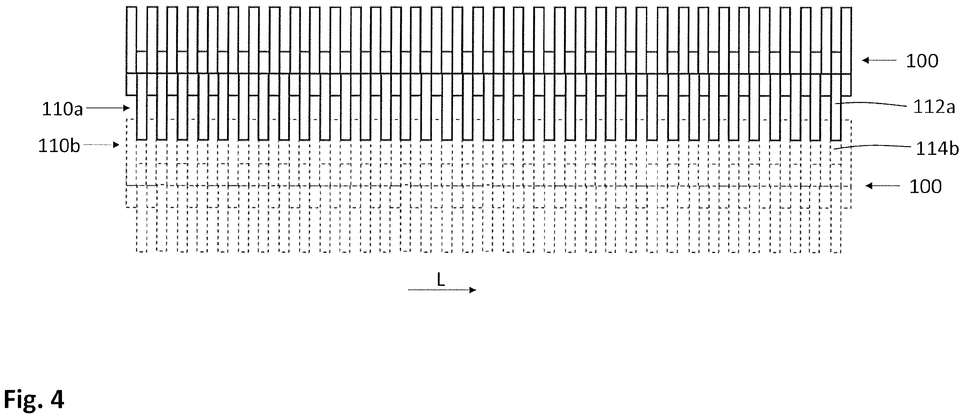

Figur 4 zeigt exemplarisch den Eingriff von zwei benachbart angeordneten Lamellenblöcken 100. Zur besseren Darstellung des Eingriffs wurde einer der beiden Lamellenblöcke 100 in Figur 4 durch Strichlinie dargestellt. Es gilt jedoch zu beachten, dass die beiden Lamellenblöcke 100 identisch ausgebildet sind. Da jedoch die beiden Lamellenblöcke 100 jeweils eine Lamellenstruktur 110 mit zwei komplementär zueinander angeordneten Lamellensätzen 110a und 110b aufweisen, kann der erste Lamellensatz 110a des einen Lamellenblocks 100 (oberer Lamellenblock 100 in Figur 3c) mit dem zweiten Lamellensatz 110b des zweiten, benachbarten Lamellenblocks 100 (unterer Lamellenblock in der Figur 3c) in Eingriff gebracht werden. Eine Verschiebung der beiden Lamellenblöcke 100 in Längsrichtung *L* zueinander ist nicht notwendig, um die beiden Lamellenblöcke 100 miteinander in Eingriff zu bringen. Vielmehr sind die beiden in Eingriff stehenden Lamellenblöcke 100 in Längsrichtung *L* deckungsgleich angeordnet. Somit reicht gemäß der vorliegenden Erfindung ein einziger Satz von Lamellenblöcken 100 aus, um einen Kalibrierkorb zu erzeugen.

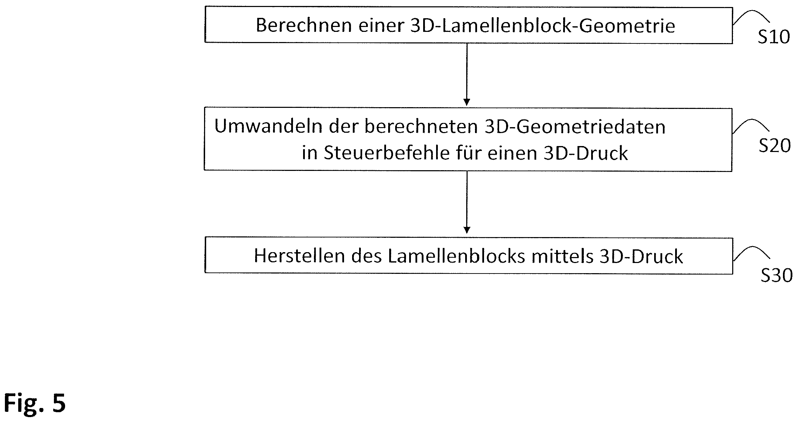

Zur Herstellung des in den Figuren 3a und 3b dargestellten Lamellenblocks 100 kann ein generatives bzw. additives Fertigungsverfahren zum Einsatz kommen. Ein derartiges Herstellungsverfahren ist in der Figur 5 gezeigt. Hierbei werden in einem ersten Schritt S10 3D-Geometriedaten (CAD-Daten) für den Lamellenblock 100 berechnet. Die 3D-Geometriedaten beschreiben die Geometrie des gesamten Lamellenblocks 100 umfassend die Trägerstruktur 120 und die Lamellenstruktur 110, 110a. In einem darauffolgenden zweiten Schritt S20 werden die berechneten 3D-Geometriedaten in Steuerbefehle für einen 3D-Druck umgewandelt. Basierend auf den erzeugten Steuerbefehlen wird dann der Lamellenblock 100 (in seiner Gesamtheit) mittels eines 3D-Druckverfahrens (z.B. Lasersintern, Laserschmelzen) schichtweise aufgebaut (Schritt S30). Als Werkstoff für den 3D-Druck kann ein metallischer Werkstoff oder ein Polymerwerkstoff zum Einsatz kommen.

Alternativ zu der hier beschriebenen Herstellung mittels 3D-Druck ist auch denkbar, dass die Lamellenblöcke 100 aus einem Werkstück (beispielsweise durch Fräsen, Bohren, Schneiden) oder mittels eines Gussverfahrens hergestellt werden.

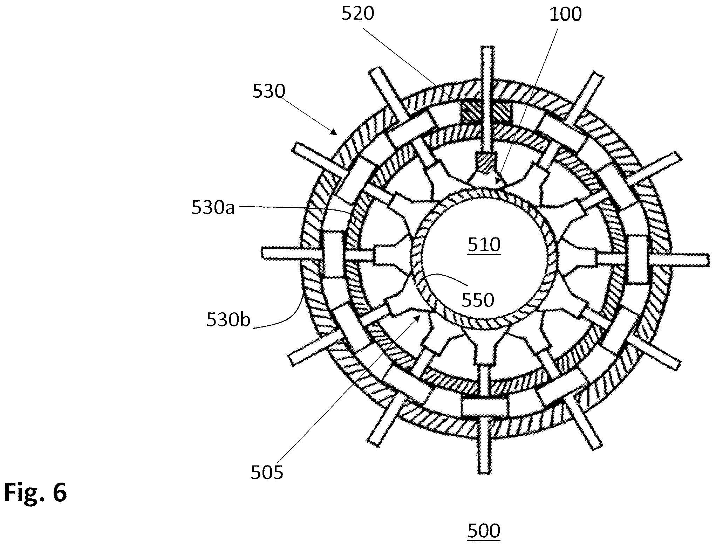

In Zusammenhang mit der Figur 6 wird eine Kalibriereinrichtung 500 zur Kalibrierung eines extrudierten Kunststoffprofils 550 beschrieben. Figur 6 zeigt eine Schnittansicht der Kalibriereinrichtung 500. Das zu kalibrierende Profil 550 ist in der in Figur 6 gezeigten Implementierung ein Rohrprofil.

Die Kalibriereinrichtung 500 umfasst eine Vielzahl der oben beschriebenen erfindungsgemäßen Lamellenblöcke 100, die in Umfangsrichtung der Kalibriereinrichtung 500 derart zueinander angeordnet sind, dass sie einen Kalibrierkorb 505 mit einer gewünschten Kalibrieröffnung 510 bilden. Wie ferner in der Figur 5 schematisch angedeutet, können die benachbarten Lamellenblöcke 100 ineinandergreifend angeordnet sein. Die Lamellen 112a, 112b und Nuten 114a, 114b benachbarter Lamellenblöcke 100 sind hierfür in ihrer Anordnung und Abmessung (insbesondere in der Nutenbreite und Lamellenbreite) derart aufeinander abgestimmt, dass Lamellen 112 benachbart angeordneter Lamellenblöcke 100 kammartig ineinander greifen können, wie in Zusammenhang mit den Figuren 3a, 3b und 4 weiter oben beschrieben.

Ferner umfasst die Kalibriereinrichtung 500 eine Vielzahl von Betätigungseinrichtungen 520 (beispielsweise Linearaktoren), wobei jeweils eine Betätigungseinrichtung 520 mit einem Lamellenblock 100 gekoppelt ist. Die Betätigungseinrichtungen 520 sind dazu vorgesehen, die jeweiligen Lamellenblöcke 100 in radialer Richtung (also senkrecht zur Vorschubrichtung des zu kalibrierenden Profils) zu verschieben. Dadurch kann der Wirkquerschnitt der Kalibrieröffnung 510 an das zu kalibrierende Profil 550 entsprechend angepasst werden.

Ferner umfasst die Kalibriereinrichtung 500 ein Gehäuse 530 zur Aufnahme der Betätigungseinrichtungen 520 und der Lamellenblöcke 100. Das Gehäuse 530 kann zylinderförmig ausgebildet sein. Es kann einen inneren Gehäusezylinder 530a und einen äußeren Gehäusezylinder 530b aufweisen, wobei Komponenten der Betätigungseinrichtung 520 in dem Zwischenraum zwischen dem inneren Gehäusezylinder 530a und dem äußeren Gehäusezylinder 530b angeordnet sein können, ähnlich zu der in der DE 198 43 340 C2 beschriebenen Kalibriereinrichtung.

Das oben beschriebene erfindungsgemäße Lamellenblockdesign ermöglicht den schnellen und einfachen Aufbau eines versatzfreien Kalibrierkorbs mit nur einem einzigen Satz von Lamellenblöcken. Die Verwendung unterschiedlicher, im Design aufeinander abgestimmter Lamellenblöcke ist nicht mehr notwendig.

## Patentansprüche

1. Lamellenblock (100) für eine Kalibriereinrichtung (500) zur Kalibrierung eines extrudierten Profils (550), wobei der Lamellenblock (100) eine Lamellenstruktur (110) umfasst, welche eine Vielzahl von Lamellen (112a, 112b) aufweist, die durch Nuten (114a, 114b) voneinander beabstandet und in Längsrichtung des Lamellenblocks (100) angeordnet sind, **dadurch gekennzeichnet, dass** die Lamellenstruktur (110) zwei Lamellensätze (110a, 110b) aufweist, wobei die Lamellen (112a) des ersten Lamellensatzes (110a) bezüglich der Lamellen (112b) des zweiten Lamellensatzes (110b) in Längsrichtung des Lamellenblocks (100) versetzt angeordnet sind.

2. Lamellenblock (100) nach Anspruch 1, **dadurch gekennzeichnet, dass** die Lamellen (112a) des ersten Lamellensatzes (110a) an einer ersten Seite (122a) des Lamellenblocks (100) angeordnet sind, und die Lamellen (112b) des zweiten Lamellensatzes (110b) an einer der ersten Seite (122a) gegenüberliegenden zweiten Seite (122b) des Lamellenblocks (100) angeordnet sind.

3. Lamellenblock (100) nach einem der vorhergehenden Ansprüche, **dadurch gekennzeichnet, dass** die Lamellen (112a) des ersten Lamellensatzes (110a) und die Lamellen (112b) des zweiten Lamellensatzes (110b) im Wesentlichen dieselbe Form aufweisen.

4. Lamellenblock (100) nach einem der vorhergehenden Ansprüche, **dadurch gekennzeichnet, dass** die beiden Lamellensätze (110a, 110b) eine identische oder zueinander unterschiedliche Teilung aufweisen.

5. Lamellenblock (100) nach einem der vorhergehenden Ansprüche, **dadurch gekennzeichnet, dass** die Lamellen (112a) des ersten Lamellensatzes (110a) bezüglich der Lamellen (112b) des zweiten Lamellensatzes (11 0b) derart versetzt angeordnet sind, dass in Längsrichtung des Lamellenblocks (100) die Lamellen (112a) des ersten Lamellensatzes (110a) mit den Nuten (114b) des zweiten Lamellensatzes (110b) zusammenfallen.

6. Lamellenblock (100) nach einem der vorhergehenden Ansprüche, **dadurch gekennzeichnet, dass** der Lamellenblock (100) ferner eine Trägerstruktur (120) aufweist, an dem die Lamellenstruktur (110) angeordnet ist.

7. Lamellenblock (100) nach Anspruch 6, wobei die Trägerstruktur (120) und die Lamellen (112a, 112b) aus demselben Material oder aus verschiedenen Materialien gefertigt sind.

8. Lamellenblock (100) nach einem der vorhergehenden Ansprüche, wobei der Lamellenblock (100) einstückig ausgebildet ist.

9. Lamellenblock (100) nach einem der vorhergehenden Ansprüche, wobei der Lamellenblock (100) mittels 3D-Druck bzw. mittels eines additiven Fertigungsverfahrens hergestellt ist.

10. Kalibriereinrichtung (500) zur Kalibrierung von extrudierten Profilen (550), umfassend eine Vielzahl von Lamellenblöcken (100) gemäß einem der Ansprüche 1 bis 9, wobei die Lamellenblöcke (100) zur Bildung einer Kalibrieröffnung zueinander angeordnet sind.

11. Kalibriereinrichtung nach Anspruch 10, wobei die Kalibriereinrichtung (500) eine Vielzahl von Betätigungseinrichtungen (520) umfasst, wobei jede Betätigungseinrichtung (520) jeweils mit einem Lamellenblock (100) gekoppelt ist, um einen jeden Lamellenblock (100) individuell zu betätigen.

12. Verfahren zum Herstellen eines Lamellenblocks (100) gemäß einem der Ansprüche 1 bis 9, umfassend den Schritt des Herstellens des Lamellenblocks (100) mittels 3D-Druck bzw. mittels additiver Fertigung.

13. Verfahren nach Anspruch 12, ferner umfassend den Schritt des Berechnens einer 3D-Lamellenblock-Geometrie, und des Umwandelns der berechneten 3D-Geometriedaten in entsprechende Steuerbefehle für den 3D-Druck bzw. die additive Fertigung.

14. Verfahren zum Herstellen eines Lamellenblocks (100), die Schritte umfassend:
- Erstellen eines Datensatzes, welcher den Lamellenblock (100) nach einem der Ansprüche 1 bis 9 abbildet;
- Speichern des Datensatzes auf einer Speichervorrichtung oder einem Server; und
- Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock (100) fertigt.

15. Computerprogramm, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung ein Lamellenblock (100) mit den Merkmalen nach einem der Ansprüche 1 bis 9 fertigt.

16. Computerlesbarer Datenträger, auf dem das Computerprogramm nach Anspruch 15 gespeichert ist.

## Claims

1. A lamella block (100) for a calibrating device (500) for calibrating an extruded profile (550), wherein the lamella block (100) comprises a lamella structure (110) having a plurality of lamellae (112a, 112b), which are spaced apart from each other by grooves (114a, 114b), and arranged in the longitudinal direction of the lamella block (100), **characterized in that** the lamella structure (110) has two lamella sets (110a, 110b), wherein the lamellae (112a) of the first lamella set (110a) are arranged offset relative to the lamellae (112b) of the second lamella set (110b) in the longitudinal direction of the lamella block (100) .

2. The lamella block (100) according to Claim 1, **characterized in that** the lamellae (112a) of the first lamella set (110a) are arranged on a first side (122a) of the lamella block (100), and the lamellae (112b) of the second lamella set (110b) are arranged on a second side (122b) of the lamella block (100) lying opposite the first side (122a).

3. The lamella block (100) according to one of the preceding claims, **characterized in that** the lamellae (122a) of the first lamella set (110a) and the lamellae (112b) of the second lamella set (110b) have substantially the same shape.

4. The lamella block (100) according to one of the preceding claims, **characterized in that** the two lamella sets (110a, 110b) have an identical or differing division with respect to one another.

5. The lamella block (100) according to one of the preceding claims, **characterized in that** the lamellae (112a) of the first lamella set (110a) are arranged offset in relation to the lamellae (112b) of the second lamella set (110b) in such a way that the lamellae (112a) of the first lamella set (110a) coincide with the grooves (114b) of the second lamella set (110b) in the longitudinal direction of the lamella block (100).

6. The lamella block (100) according to one of the preceding claims, **characterized in that** the lamella block (100) further has a carrier structure (120) on which the lamella structure (110) is arranged.

7. The lamella block (100) according to Claim 6, wherein the carrier structure (120) and the lamellae (112a, 112b) are manufactured from the same material or from different materials.

8. The lamella block (100) according to one of the preceding claims, wherein the lamella block (100) is formed in one piece.

9. The lamella block (100) according to one of the preceding claims, wherein the lamella block (100) is produced by means of 3D printing or respectively by means of an additive manufacturing process.

10. A calibrating device (500) for calibrating extruded profiles (550), comprising a plurality of lamella blocks (100) according to one of Claims 1 to 9, wherein the lamella blocks (100) are arranged relative to each other to form a calibrating opening.

11. The calibrating device according to Claim 10, wherein the calibrating device (500) comprises a plurality of activating devices (520), wherein each activating device (520) is coupled respectively with a lamella block (100) in order to individually activate each lamella block (100).

12. A method for producing a lamella block (100) according to one of Claims 1 to 9, comprising the step of producing the lamella block (100) by means of 3D printing or respectively by means of additive manufacturing.

13. The method according to Claim 12, further comprising the step of calculating a 3D lamella block geometry and converting the calculated 3D geometric data into corresponding control commands for the 3D printing or respectively the additive manufacturing.

14. A method for producing a lamella block (100), comprising the steps:
- generating a dataset, which images the lamella block (100) according to one of Claims 1 to 9,
- storing the dataset on a storage device or a server, and
- inputting the dataset into a processing device or a computer, which actuates an additive manufacturing device in such a way that the latter manufactures the lamella block (100) imaged in the dataset.

15. A computer program, comprising datasets, which on the reading-in of the datasets by a processing device or a computer, causes the latter to actuate an additive manufacturing device in such a way that the additive manufacturing device manufactures a lamella block (100) with the features according to one of Claims 1 to 9.

16. A computer-readable data carrier on which the computer program according to Claim 15 is stored.

## Revendications

1. Bloc de lamelles (100) pour un dispositif de calibrage (500) pour calibrer un profilé (550) extrudé, dans lequel le bloc de lamelles (100) comprend une structure de lamelles (110) qui présente une pluralité de lamelles (112a, 112b) qui sont espacées les unes des autres par des rainures (114a, 114b) et sont disposées dans le sens longitudinal du bloc de lamelles (100), **caractérisé en ce que** la structure de lamelles (110) présente deux jeux de lamelles (110a, 110b), dans lequel les lamelles (112a) du premier jeu de lamelles (110a) sont disposées décalées dans le sens longitudinal du bloc de lamelles (100) par rapport aux lamelles (112b) du second jeu de lamelles (110b).

2. Bloc de lamelles (100) selon la revendication 1, **caractérisé en ce que** les lamelles (112a) du premier jeu de lamelles (110a) sont disposées sur un premier côté (122a) du bloc de lamelles (100), et les lamelles (112b) du second jeu de lamelles (110b) sont disposées sur un second côté (122b) du bloc de lamelles (100) face au premier côté (122a).

3. Bloc de lamelles (100) selon l'une des revendications précédentes, **caractérisé en ce que** les lamelles (112a) du premier jeu de lamelles (110a) et les lamelles (112b) du second jeu de lamelles (110b) présentent essentiellement la même forme.

4. Bloc de lamelles (100) selon l'une des revendications précédentes, **caractérisé en ce que** les deux jeux de lamelles (110a, 110b) présentent une division identique ou différente entre eux.

5. Bloc de lamelles (100) selon l'une des revendications précédentes, **caractérisé en ce que** les lamelles (112a) du premier jeu de lamelles (110a) sont disposées ainsi décalées par rapport aux lamelles (112b) du second jeu de lamelles (110b) que dans le sens longitudinal du bloc de lamelles (100), les lamelles (112a) du premier jeu de lamelles (110a) coïncident avec les rainures (114b) du second jeu de lamelles (110b).

6. Bloc de lamelles (100) selon l'une des revendications précédentes, **caractérisé en ce que** le bloc de lamelles (100) présente en outre une structure porteuse (120) sur laquelle est disposée la structure de lamelles (110).

7. Bloc de lamelles (100) selon la revendication 6, dans lequel la structure porteuse (120) et les lamelles (112a, 112b) sont fabriquées dans le même matériau ou dans des matériaux différents.

8. Bloc de lamelles (100) selon l'une des revendications précédentes, dans lequel le bloc de lamelles (100) est conçu d'une seule pièce.

9. Bloc de lamelles (100) selon l'une des revendications précédentes, dans lequel le bloc de lamelles (100) est fabriqué par impression 3D, respectivement par un procédé de fabrication additive.

10. Dispositif de calibrage (500) pour calibrer des profilés extrudés (550), comprenant une pluralité de blocs de lamelles (100) selon l'une des revendications 1 à 9, dans lequel les blocs de lamelles (100) sont disposés entre eux pour former une ouverture de calibrage.

11. Dispositif de calibrage selon la revendication 10, dans lequel le dispositif de calibrage (500) comprend une pluralité de dispositifs d'actionnement (520), dans lequel chaque dispositif d'actionnement (520) est couplé respectivement à un bloc de lamelles (100) pour actionner un chaque bloc de lamelles (100) individuellement.

12. Procédé de fabrication d'un bloc de lamelles (100) selon l'une des revendications 1 à 9, comprenant l'étape de fabrication du bloc de lamelles (100) par impression 3D, respectivement par un procédé de fabrication additive.

13. Procédé selon la revendication 12, comprenant en outre l'étape de calcul d'une géométrie 3D de bloc de lamelles et de conversion des données de géométrie 3D calculées en des commandes de pilotage correspondantes pour l'impression 3D ou la fabrication additive.

14. Procédé de fabrication d'un bloc de lamelles (100), les étapes comprenant :
- la réalisation d'un jeu de données qui représente le bloc de lamelles (100) selon l'une des revendications 1 à 9 ;
- l'enregistrement du jeu de données sur un dispositif d'enregistrement ou un serveur ; et
- la saisie du jeu de données dans un dispositif de traitement ou un ordinateur qui pilote un dispositif de fabrication additive de façon à ce que celui-ci fabrique le bloc de lamelles (100) représenté dans le jeu de données.

15. Programme informatique, comprenant des jeux de données qui, lorsque les jeux de données sont lus par un dispositif de traitement ou un ordinateur, fait que celui-ci pilote un dispositif de fabrication additive de façon à ce que le dispositif de fabrication additive fabrique un bloc de lamelles (100) avec les caractéristiques selon l'une des revendications 1 à 9.

16. Support de données lisible sur ordinateur, sur lequel le programme informatique selon la revendication 15 est enregistré.
